# EUROPEAN PATENT SPECIFICATION

(11) **EP 2 660 610 B1**
(45) Date of publication and mention of the grant of the patent: **21.11.2018**
(21) Application number: 13166486.4
(22) Date of filing: 03.05.2013
(51) Int. Cl.: G01D 5/244, G01P 3/487, G01D 5/14, G01D 5/347, F16D 3/12, G01P 1/02

(54) **Carrier ring for an encoder**
Trägerring für einen Kodierer
Bague de support pour codeur

(30) Priority: 04.05.2012 SE 1250454
(43) Date of publication of application: 06.11.2013
(73) Proprietor: LEINE & LINDE AB, 645 21 Strängnäs (SE)
(72) Inventor: Arnstein, Richard, 645 91 Strängnäs (SE)
(74) Representative: Zacco Sweden AB

(56) References cited:
- DE-A1-102010 030 121
- US-A- 3 463 520
- US-A- 3 774 675
- US-A- 4 942 295
- US-A1- 2008 240 849
- US-A1- 2012 076 575

## Description

### Background

Encoders are often used in environments where they are subjected to much vibration, and often in a heavily contaminated environment. The encoder may, for instance, be used to generate the position values of shaft rotation in a machine. For instance, the encoder may be attached to a rotating shaft in the machine. The encoding disc is caused to rotate as the shaft rotates, and the encoder casing and detector are firmly affixed to the casing of the machine.

Traditionally, an optoelectrical state encoder has been used, which includes an encoding disc that has an optically readable pattern. The disc pattern is read by one or more sensor heads having at least one detector, which each deliver an electric signal in relation to the amount of light that is received in the detector, so that movement of the encoding disc in relation to the detector will be indicated by changes in the electric signal.

The encoding disc includes a periodic pattern, such as a plurality of reflective and non-reflective fields of mutually the same size, for instance. When the encoding disc is twisted or rotated, the change between and non-reflective fields can be detected and a change in angle thus determined.

Besides the use of optical/reflective encoders, there are also encoders for magnetic and inductive scanning.

However, when the shafts have very large diameters, such conventional encoders meet its limitation due to the need for specialized mounting, such as toothed belt concepts, that are complicated and expensive. Neither can conventional encoders be used for shaft ends that are inaccessible, nor can conventional encoders be used for hollow shafts. Recently, magnetic encoders have been introduced in the market, including a magnetic tape that can be installed on large shafts more easily and inexpensive compared to the conventional encoders. When a magnetic tape is used, a solid unseparated carrier ring is installed on the shaft, which carrier ring supports the magnetic tape. A sensor head for reading the magnetic tape is arranged with a small air gap close to the magnetic tape on the carrier ring that is arranged on the shaft. There is also similar equipment involved within magnetoresistive, optical/reflective and inductive scanning, comprising also the use of a sensor head for reading/scanning towards a carrier ring that is arranged on a shaft.

Hence, one problem with the use of magnetic, magnetoresistive, optical/reflective and inductive encoders is still that it is difficult or even impossible to install the encoder equipment, and especially the carrier ring on a shaft. In some machines and applications, such as in wind turbines of a wind power plant, there is very little space for installations of additional equipment. The installation of a unseparated carrier ring on a shaft is dependent on the sequence of mounting of for instance a wind turbine. In for instance wind turbines or the like, there is also a need for keeping the weight as low as possible. Consequently, it is desirable to use light weight materials, such as light metals, for all additional equipment. When a carrier ring is mounted on a shaft in a machine, the ring has to be heated in order to bring the ring onto the shaft. A carrier ring brought onto a shaft is screwed to a flange of the shaft. However, a shaft is often made of steel and when a carrier ring is installed by heating on the steel shaft there will be subsequent difficulties with alignment and straightening of the ring on the shaft due to different coefficient of thermal expansion of steel compared to a light metal. The problem with high stress still remains if there are materials involved having different coefficient of thermal expansion for the carrier ring and the shaft, although the carrier ring is fixed to a flange. It is important that the installation of the ring does not produce too much stress. It is a major problem and time consuming to adjust a conventional carrier ring when mounted on a shaft with the prior art method.

Usually the shaft has a form defect, for instance an oval shape or a polygon shape in a cross section of the shaft. Hence, the mounted carrier ring must be subsequently adjusted when mounted in place on the shaft, taken the form defect into consideration. With the installation of the carrier ring by heating onto the steel shaft according to the prior art method, and fixing the carrier ring to the flange of the shaft, the subsequent adjustment work to compensate for the form defect is time-consuming and troublesome.

In addition to the form defect, a position defect due to eccentricity of rotation between the carrier ring and the shaft is often present and that needs to be adjusted after mounting the carrier ring in place on the shaft. To correct for both a form defect and a position defect in an encoder, having a carrier ring installed in its position on a shaft, is complicated.

DE 29622996 U1 discloses an encoder ring for easy assembly on a shaft, comprising oblong openings for a resilient action of the encoder ring.

WO 2011018330 A2 discloses a pole wheel arrangement for a rotary encoder, wherein the pole wheel comprises pole wheel segments.

US 2008/0240849 A1 discloses a cylindrical shaft collar with a central bore. A screw is advanced to press against the lower wall of a slot in the collar such that the wall presses an arcuate segment against a shaft for securing the collar to the shaft.

The objective of the present invention is to provide a carrier ring for an encoder that eliminates the disadvantages associated with prior art. A further objective is to achieve an improved carrier ring for an encoder that is easy and uncomplicated to install, compared to prior art. Yet a further object is to improve the adjustability of a carrier ring when mounted on a shaft.

### Summary of the invention

The above objectives are solved by the present invention which relates to a carrier ring for an encoder. The carrier ring comprises suspension means with resilient members. Adjustment elements are arranged in connection with the resilient members, in order to provide an effective resilient effect and adjustability of the carrier ring. The resilient members at the inner periphery of the carrier ring comprise protrusions which are adjustable by means of the adjustment elements in the direction towards the central axis of the ring. The resilient members are formed integrally with the ring. The resilient members comprise through openings in the carrier ring, the through openings are positioned closer to an inner periphery of the carrier ring such that a respective thin wall section with a decreased thickness is formed for each opening, towards the inner periphery, which position of the wall section can be altered by resilient action by influence of the adjustment elements. The openings have an oblong shape. Further, the openings are suitably evenly spread circumferentially around the ring. Preferably, the number of openings is at least three.

In accordance with the solution of the present invention, a carrier ring that is easily installed and can be adjusted in an uncomplicated way is achieved. Due to the suspension properties of the carrier ring, heating of the carrier ring is no longer necessary. A dimension of the inner periphery of carrier ring that is slightly larger than the shaft can be used, whereby it is possible to bring the ring onto the shaft without heating, and subsequently the resilient members of the suspension means of the carrier ring are adjusted by the adjustment elements such that the carrier ring is firmly attached on the shaft. Another advantage is that different materials for the shaft and the carrier ring can be used without any substantial difficulties with adjustment of the carrier ring when mounted on the shaft. Thus, the carrier ring can be clamped to the shaft. The present invention makes it possible to produce inexpensive shafts since there is no longer a need to turn down a shaft in order to form a flange for attachment of a carrier ring.

According to another embodiment of the present invention, the ring can be divided and demountable in at least two sections. The carrier ring may at least partially be made of a light metal or light metal alloy. Suitably the metal is Al and/or Ti. Further, the ring may comprise attachment holes for fixing the ring towards a collar of a shaft.

Other objectives, embodiments and advantages of the present invention are described in closer detail in the description and in the subsequent patent claims.

### Brief description of the drawings

The invention will hereinafter be described with reference to embodiments of the present invention and the accompanying drawings, in which
Figure 1A schematically shows an encoder assembly in a perspective view in accordance with an embodiment of the present invention,
Figure 1B schematically shows the encoder assembly in Fig. 1A in a side view, where a part of the carrier ring and the sensor head is shown in cross section,
Figure 2 schematically shows a carrier ring for an encoder in a side view in accordance with an embodiment of the present invention,
Figure 3 schematically shows a carrier ring for an encoder in a side view in accordance with another embodiment of the present invention,
Figure 4A shows schematically in a side view in a further embodiment alternative suspension means of a carrier ring, in a cross-sectional view, for an encoder, not falling within the scope of the claims.
Figure 4B shows schematically in yet an embodiment in a side view alternative suspension means of a carrier ring for an encoder, not falling within the scope of the claims.
Figure 4C shows schematically in yet an embodiment in a side view alternative suspension means of a carrier ring for an encoder, not falling within the scope of the claims.
Figure 4D shows schematically in yet an embodiment in a side view alternative suspension means of a carrier ring, in a cross-sectional view, for an encoder, not falling within the scope of the claims.
Figure 5A shows yet another embodiment of alternative suspension means of a carrier ring in a schematic perspective view, not falling within the scope of the claims.
Figure 5B schematically shows the carrier ring in Fig. 5A in a side view, where a part of the carrier ring and the sensor head is shown in cross section.

### Detailed description

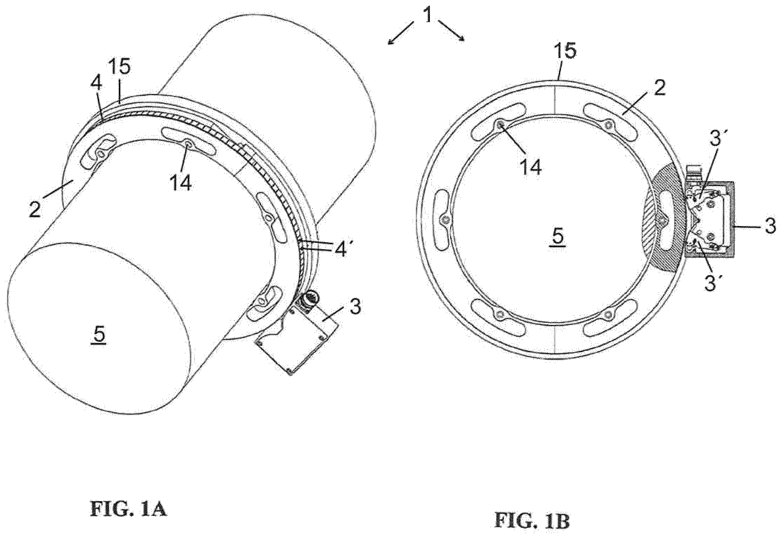

The embodiment in the Figs. 1A-B show a carrier ring 2 for an encoder assembly 1 in accordance with embodiments of the present invention, suitable for magnetoresistive, magnetic, optical/reflective or inductive scanning. The encoder assembly 1 also comprises sensing means 3, such as a sensor head with two adjustable detectors 3', for scanning directly towards a rotatable encoding member 4 positioned on the carrier ring 2. The carrier ring 2 is intended to be installed on a shaft 5 of a machine. Hence, the encoding member 4 is caused to rotate as the shaft 5 rotates. For instance, in a magnetic encoder the encoding member 4 is a magnetic element(s), such as a magnetic tape with poles 4', carried directly on the carrier ring 2. The magnetic element(s) can also be e.g. one or more magnets that are attached in plastics and moulded onto a ring where it is magnetized. For all optical/reflective and inductive encoders having the similar design with rings and sensor heads, the same basic idea of the present invention can be applicable. According to a preferred embodiment, the present invention relates to magnetic scanning.

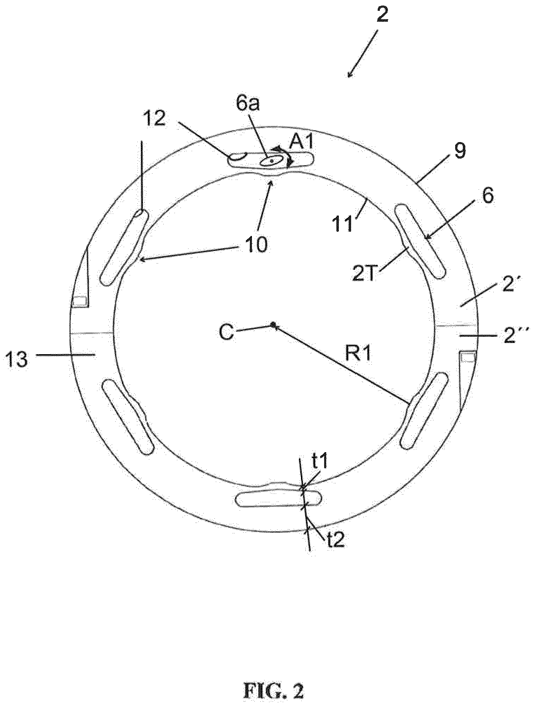

The carrier ring 2 according to the present invention comprises suspension means with resilient members. According to the embodiment described and shown in Fig. 1 and 2 the resilient members 6, 6' are provided as hollow, through openings 12. The through openings are extending from one short side 13 of the ring to the other, and an "axis", perpendicular to the plane of the paper, through a respective opening 12 is extending in parallel to the ring rotational centre axis C. Preferably, the openings 12 have an oblong shape. In order to provide an effective resilient effect and adjustability of the carrier ring, it is suitable that the through openings 12 are arranged closer to the inner periphery 11 of the ring 2. Hence, a thin wall section 2T having a diminished wall thickness t1 between the inner periphery 11 to the openings 12 is substantially smaller than a thickness t2 between the opening 12 and the outer periphery 9 of the ring.

The inner periphery 11 of the carrier ring 2 comprises protrusions 10 which are an integral part of the thin wall section 2T and intended as contact surfaces towards the shaft. According to the embodiments as shown in Figs. 2-3, the protrusions 10 can be formed as discrete supporting points at the inner periphery 11 of the ring opposite each opening 12.

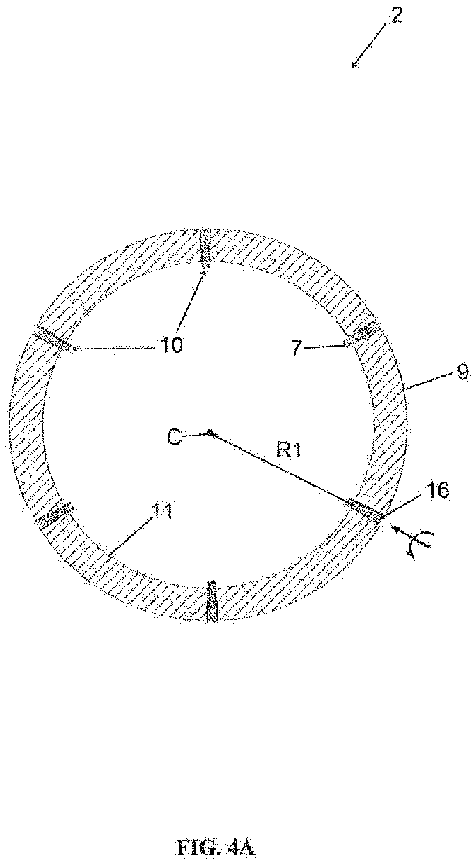

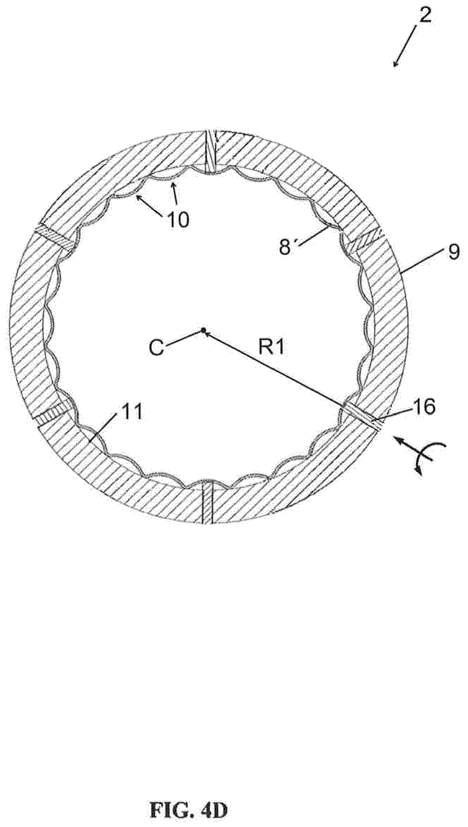

In the embodiments as shown in Figs. 2-3, adjustment elements 6a, such as an eccenter, can be arranged in connection with the resilient members 6, 6' in various alternative ways in order to alter the resilient action in each of the openings 12. An adjustment element in the form of an eccenter 6a can for instance be an eccenter disc or pin which is placed in the opening. When the eccenter 6a is affected by rotating (see arrow A1 in Fig. 2) the eccenter in the opening 12 to act against the surrounding walls in the openings 12, the thinner wall t1 between the inner periphery 11 and the openings 12 is resilient and will be bent in the direction R1 towards the central axis C of the ring 2. Consequently, the protrusions 10 are adjustable by means of the adjustment elements 6a in the direction R1 towards the central axis C of the ring 2. The other way around, when the eccenter 6a is rotated such that it is not acting against the walls in the openings 12, the thinner wall t1 between the inner periphery 11 and the openings 12 will spring back. Hence, the protrusions 10 are also adjustable, by means of the adjustment elements 6a, in the opposite direction (opposite direction of arrow R1) away from the central axis C of the ring 2. As described further below (with reference to Figs. 4A and 4D), another alternative adjustment element, not falling within the scope of the claims, can be a screw, bolt or the similar that is in connection with the thinner wall t1 between the inner periphery 11 to the openings 12 from the outside periphery 9 of the ring 2 via through openings (not shown in Figs. 2-3) extending radially R1 of the ring 2.

As mentioned above, the through openings 12 are positioned closer to an inner periphery 11 of the carrier ring 2 such that a respective thin wall section 2T with a diminished thickness t1 is formed for each opening 12, towards the inner periphery 11. With other words, as a consequence, the position of the wall section 2T can be altered by resilient action by influence of the adjustment elements 6a.

Hence, due to the suspension properties of the carrier ring 2, heating of the ring is no longer necessary for installation of the ring 2 on a shaft. It is sufficient to use a dimension of the inner periphery 11 of the ring 2 that is slightly larger than the shaft, whereby it is possible to bring the ring 2 onto the shaft without heating. Subsequently the resilient members 6, 6' of the carrier ring 2 are adjusted such that the ring is firmly attached on the shaft. Thanks to the design of the resilient members, different materials for a shaft and the carrier ring 2 can be used without any substantial difficulties with adjustment of the ring when mounted on a shaft.

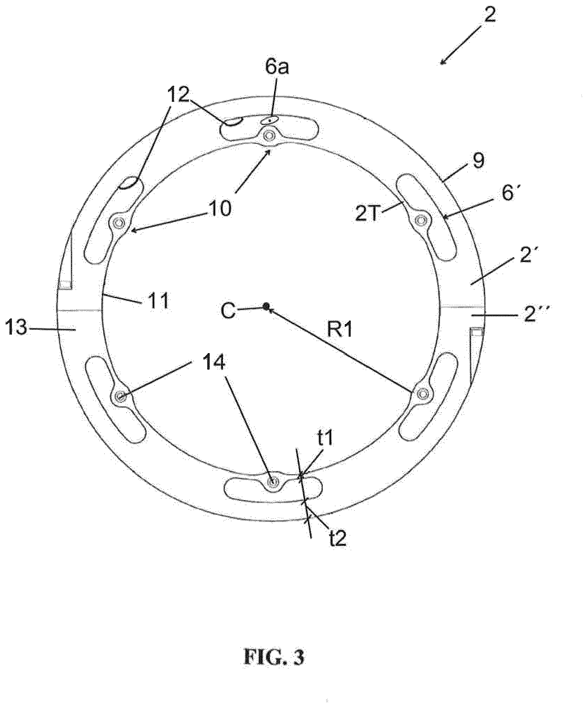

According to the embodiment described and shown with reference to Fig. 3, the same reference numbers as in the embodiment of Fig. 2 have been used for the similar features. The difference in Fig.3 compared to the embodiment disclosed above and shown in Fig. 2 is that the carrier ring 2 may also comprise attachment holes 14 as shown in the embodiment of Fig. 3 (and also in embodiment in Fig. 1), for fixing the ring 2 towards a collar 15 (see Figs. 1A and 1B) of the shaft 5 of a machine.

Consequently, the resilient members 6, 6' according to the embodiments shown in Fig. 2 and 3 are intrinsic and thus formed integrally with the ring 2. With other words, the resilient members 6, 6' are formed unseparated and internal in the carrier ring 2. As a result, the cost can be reduced and the assembly to the shaft is easier due to fewer parts.

On the contrary, not falling within the scope of the claims, in the embodiments shown in Figs. 4A-D, the resilient members 7, 7'; 8, 8' are extrinsic and externally formed non-integrally with the ring 2. According to the embodiment described and shown with reference to Fig. 4A-D, the same reference numbers as in the embodiment of Fig. 2-3 have been used for the similar features.

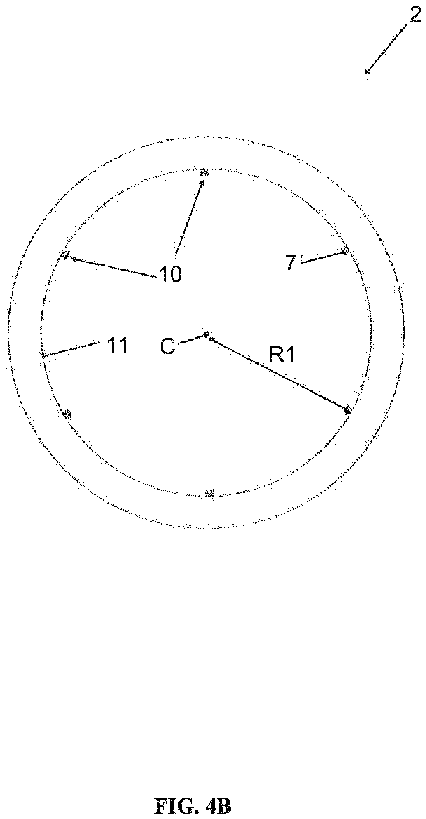

The resilient members may comprise coil springs 7, 7', as shown in Figs. 4A-B, not falling within the scope of the claims. The coil springs 7' can be arranged at the inner periphery 11 of the ring 2 as shown in Fig. 4B. Alternatively, the coil springs 7 can be arranged in recesses at the inner periphery of the ring and partly extending out from the inner periphery 11 as shown in Fig. 4A. In the embodiment in Fig. 4A, not falling within the scope of the claims, adjustment means 16, such as an adjusting screw bolt, pin or the similar, are in connection with the coil spring 7 from the outside periphery 9 of the ring 2 via through openings extending radially of the ring 2.

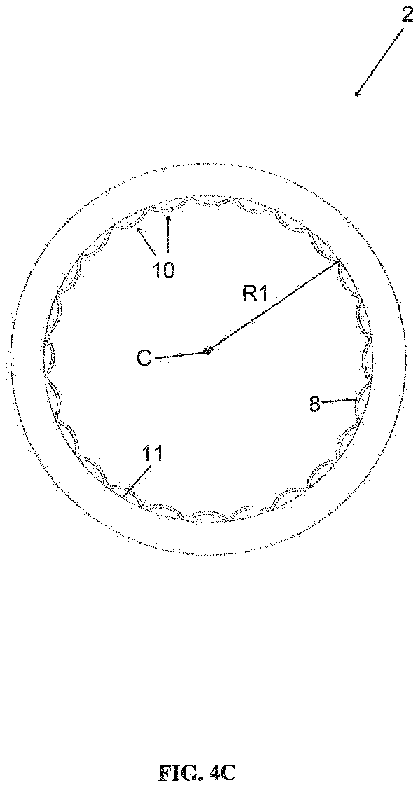

The resilient members may also be in the shape of a folded metal sheet 8, 8', such as a wave-formed strip, as shown in Figs. 4C-D, arranged at the inner periphery 11 of the ring 2 according to the embodiments not falling within the scope of the claims. A folded metal sheet 8, 8' can also be a folded plate, folded one or more times, in the shape of a U- or W-form or the similiar. Adjustment means 16 can be in connection with the resilient members 8', adjustable from the outside periphery 9 of the ring 2 via through openings extending radially of the ring 2.

Hence, the coil springs 7, 7' and the folded metal sheet 8, 8', respectively, in the embodiments in Figs. 4A-D, works as protrusions, in the similar way as the protrusions 10 mentioned in Figs. 2-3. The coil springs 7, 7' and the folded metal sheet 8, 8' are adjustable in the direction R1 towards the central axis C of the ring 2, when extending from the inner periphery 11 of the carrier ring 2

Further, the ring 2 is suitably divided and demountable in at least two sections 2', 2" as illustrated in Figs. 2-3, which facilitates the installation on a shaft compared to a solid, unseparable ring. As a result, the divided ring 2 can be attached to the shaft 5 any time during production or assembly of a machine, and it is also easy to exchange or detach the ring for service. The requirements of roundness of the shaft can also be reduced, thanks to the present invention. Additionally, any form defect of the shaft can be compensated for. The carrier ring 2 can at least partially be made of a light metal or light metal alloy, the light metal(s) is preferably Al and/or Ti. The resilient members 6, 6', 7, 7', 8, 8' are preferably evenly spread circumferentially around the ring 2. Consequently, one advantage with the carrier ring is according to the invention is that the variations of coefficient of thermal expansion of steel compared to a light metal is no longer a problem. The number of resilient members 6, 6', 7, 7', 8, 8' is at least three, which is the minimum number of supporting points with resilient members in order for centering the carrier ring on a shaft. The number of resilient members 6, 6', 7, 7', 8, 8' can suitably be six or more.

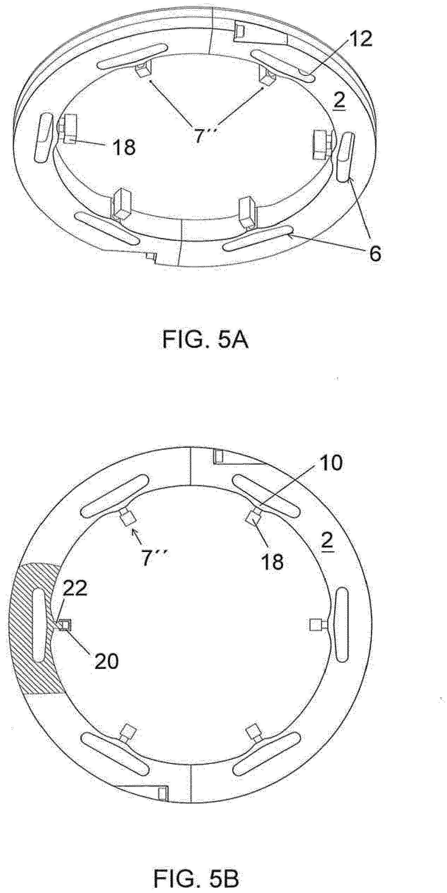

According to yet another embodiment, as shown in Figs. 5A-B, not falling within the scope of the claims, the carrier may comprise of an alternative type of non-integral resilient member 7". Further, according to the embodiment as described with reference to Figs. 5A-B, not falling within the scope of the claims, the resilient members 6, 6', 7, 7', 7", 8, 8' can be formed both integrally and non-integrally with the ring 2. Hence, intrinsic resilient members 6, 6' can cooperate and interact with extrinsic resilient members 7, 7', 7", 8, 8' at the same time in the same carrier ring 2. According to the embodiment described and shown with reference to Fig. 5A-B, not falling within the scope of the claims, the same reference numbers as in the embodiment of Fig. 2-3 and 4A-D have been used for the similar features. As evident from Figs. 5A-B, the carrier ring may have the integral resilient members 6 comprising the suitable through openings 12, preferably positioned closer to an inner periphery 11 of the carrier ring 2 such that a respective thin wall section 2T with a decreased thickness t1 is formed for each opening 12, towards the inner periphery 11. As also evident from Figs. 5A-B, not falling within the scope of the claims, the carrier ring 2 may also have non-integral resilient members 7, 7', 7", 8, 8' in addition. In Figs. 5A-B is shown an embodiment of a non-integral resilient member 7" that is formed as a foot support 18 arranged on the protrusion 10 on the inside of the ring and to protrude radially towards the centre C of the ring. The foot support 18 can also be adjustable. For instance, the foot support 7" can be formed as an outer casing 20 that can be displaceably arranged on a tap 22 arranged, suitably fixed to, the protrusion 10.

## Claims

1. A carrier ring (2) for an encoder (1), the carrier ring (2) comprises suspension means with resilient members (6; 6'; 7; 7'; 7"; 8; 8'), adjustment elements (6a; 16) are arranged in connection with the resilient members (6; 6'; 7; 7'; 7"; 8; 8'), in order to provide an effective resilient effect and adjustability of the carrier ring, the resilient members (6; 6') are formed integrally with the ring (2), wherein the resilient members (6; 6') comprises through openings (12) in the carrier ring (2), the through openings (12) have an oblong shape and are positioned closer to an inner periphery (11) of the carrier ring (2) such that a respective thin wall section (2T) with a decreased thickness (t1) is formed for each opening (12), towards the inner periphery (11), which position of the wall section can be altered by resilient action by influence of the adjustment elements (6a; 16), **characterised in that** the resilient members (6; 6') at the inner periphery (11) of the carrier ring (2) comprises protrusions (10) which are adjustable by means of the adjustment elements (6a; 16) in the direction (R1) towards the central axis (C) of the ring (2).

2. The carrier ring (2) according to claim 1, wherein the carrier ring (2) is at least partially made of a light metal or light metal alloy.

3. The carrier ring (2) according to claim 2, wherein the metal is Al and/or Ti.

4. The carrier ring (2) according to according to any of the preceding claims, wherein the ring (2) is divided and demountable in at least two sections (2', 2").

5. The carrier ring (2) according to claim 1, wherein the openings (12) are evenly spread circumferentially around the ring (2).

6. The carrier ring (2) according to claim 1 or 5, wherein the number of openings (12) is at least three.

7. The carrier ring (2) according to according to any of the preceding claims, wherein the ring (2) comprises attachment holes (14) for fixing the ring (2) towards a collar of a shaft.

## Patentansprüche

1. Trägerring (2) für einen Kodierer (1), wobei der Trägerring (2) Aufhängungsmittel mit elastischen Elementen (6; 6'; 7; 7'; 7"; 8; 8') umfasst, Einstellungselemente (6a; 16) in Verbindung mit den elastischen Elementen (6; 6'; 7; 7'; 7"; 8; 8') angeordnet sind, um einen wirksamen elastischen Effekt und eine wirksame Einstellbarkeit des Trägerrings bereitzustellen, wobei die elastischen Elemente (6; 6') integral mit dem Ring (2) gebildet sind, wobei die elastischen Elemente (6; 6') Durchgangsöffnungen (12) in dem Trägerring (2) umfassen, die Durchgangsöffnungen (12) eine längliche Form aufweisen und zu einem Innenumfang (11) des Trägerrings (2) derart näher angeordnet sind, dass ein jeweiliger dünner Wandabschnitt (2T) mit einer reduzierten Dicke (t1) für jede Öffnung (12), in Richtung des Innenumfangs (11), gebildet ist, welche Position des Wandabschnitts durch elastisches Wirken unter Beaufschlagung der Einstellungselemente (6a; 16) geändert werden kann, **dadurch gekennzeichnet, dass** die elastischen Elemente (6; 6') am Innenumfang (11) des Trägerrings (2) Vorsprünge umfassen (10), die mittels der Einstellungselemente (6a; 16) in Richtung (R1) der Mittelachse (C) des Rings (2) einstellbar sind.

2. Trägerring (2) nach Anspruch 1, wobei der Trägerring (2) zumindest teilweise aus einem leichten Metall oder einer leichten Metalllegierung hergestellt ist.

3. Trägerring (2) nach Anspruch 2, wobei das Metall Al und/oder Ti ist.

4. Trägerring (2) nach einem der vorgehenden Ansprüche, wobei der Ring (2) geteilt ist und in mindestens zwei Abschnitten (2', 2") demontierbar ist.

5. Trägerring (2) nach Anspruch 1, wobei die Öffnungen (12) gleichmäßig um den Umfang des Rings (2) herum verteilt sind.

6. Trägerring (2) nach Anspruch 1 oder 5, wobei die Anzahl von Öffnungen (12) mindestens drei beträgt.

7. Trägerring (2) nach einem der vorgehenden Ansprüche, wobei der Ring (2) Befestigungslöcher (14) zum Fixieren des Rings (2) an einem Kragen oder einem Schaft umfasst.

## Revendications

1. Bague de support (2) pour un codeur (1), la bague de support (2) comprenant des moyens de suspension avec des éléments élastiques (6; 6'; 7; 7'; 7"; 8; 8'), des éléments de réglage (6a; 16) étant agencés en liaison avec les éléments élastiques (6; 6'; 7; 7'; 7"; 8; 8'), afin de fournir un effet élastique efficace et une capacité de réglage de la bague de support, les éléments élastiques (6; 6') étant formés d'une seule pièce avec la bague (2), dans laquelle les éléments élastiques (6; 6') comprennent des ouvertures traversantes (12) dans la bague de support (2), les ouvertures traversantes (12) ayant une forme oblongue et sont positionnées plus près d'une périphérie intérieure (11) de la bague de support (2) si bien qu'une section de paroi mince respective (2T) d'épaisseur réduite (t1) est formée pour chaque ouverture (12) vers la périphérie intérieure (11), ladite position de la section de paroi pouvant être altérée par une action élastique sous l'influence des éléments de réglage (6a; 16), **caractérisée en ce que** les éléments élastiques (6; 6') à la périphérie intérieure (11) de la bague de support (2) comprennent des saillies (10) réglables au moyen des éléments de réglage (6a; 16) dans la direction (R1) vers l'axe central (C) de la bague (2).

2. Bague de support (2) selon la revendication 1, dans laquelle la bague de support (2) est au moins partiellement constituée d'un métal léger ou d'un alliage de métal léger.

3. Bague de support (2) selon la revendication 2, dans laquelle le métal est Al et / ou Ti.

4. Bague de support (2) selon l'une quelconque des revendications précédentes, dans laquelle la bague (2) est divisée et démontable en au moins deux sections (2', 2").

5. Bague de support (2) selon la revendication 1, dans laquelle les ouvertures (12) sont réparties uniformément circonférentiellement autour de la bague (2).

6. Bague de support (2) selon la revendication 1 ou 5, dans laquelle le nombre d'ouvertures (12) est d'au moins trois.

7. Bague de support (2) selon l'une quelconque des revendications précédentes, dans laquelle la bague (2) comprend des trous de fixation (14) destinés à fixer la bague (2) vers une collerette d'un arbre.
